# EUROPEAN PATENT APPLICATION

(11) **EP 2 071 239 A2**
(43) Date of publication of application: **17.06.2009**
(21) Application number: 08397525.0
(22) Date of filing: 10.12.2008
(51) Int. Cl.: F23L 7/00, F23J 7/00

(54) **A method for preventing corrosion on the heat exchange surfaces of a boiler, and a supply means for additional material**

(30) Priority: 10.12.2007 FI 20075891
(71) Applicant: Metso Power Oy, 33101 Tampere (FI)
(72) Inventor: Roppo, Juha, FI-37560, Lempäälä (FI); Silvennoinen, Jaani, FI-33100, Tampere (FI); Kainu, Vesa, FI-36200, Kangasala (FI); Rantee, Asko, FI-37150, Nokia (FI); Petänen, Pertti, FI-33720, Tampere (FI)
(74) Representative: Rahkonen, Erkki Juhani

(57) **Abstract**

A supply means and a method for preventing corrosion on heat exchange surfaces of a boiler, especially in superheaters (2), in which method additional material is fed to flue gases of a boiler by means of at least one supply means (12a, 12b) for additional material, which means comprises several nozzles for feeding the additional material. The additional material is fed by means of a supply means (12a, 12b), which supply means (12a, 12b) is a cooled case beam that is hollow inside.

## Description

### Field of the invention

The invention relates to a method for preventing corrosion on the heat exchange surfaces of a boiler according to the preamble of the appended claim 1. The invention also relates to a supply means for additional material according to the preamble of the appended claim 8.

### Background of the invention

Many compounds are formed in steam boilers, which compounds are harmful to the materials of the heat exchange surfaces of the boiler and/or when entering the environment with flue gases. Especially when burning biofuel and refuse fuel, corrosion of the heat exchange surfaces of the boiler, especially corrosion of superheater pipes, has been detected. In addition, it has been detected that ash created in combustion deposits on the heat exchange surfaces, which reduces the heat exchange.

The above-mentioned biofuels include botanical materials from nature, such as wood chips, bark, agrobiomass, sawdust, black liquor and the like. Refuse fuels include, for example, sorted household refuse, industrial waste and waste from businesses, and demolition wood.

These fuels include significant amounts of chlorine. Together with sodium and potassium released from fuel they form gaseous alkaline chlorides in flue gases, which are condensed and deposited on heat exchange surfaces, especially on superheater surfaces. Deposition and condensation takes places especially in places where the surface temperature of heat exchange surfaces is below 650 °C. When the surface temperature of a heat exchange surface is above 450 °C, the alkaline chlorides cause chlorine corrosion.

When flue gases cool, the evaporated alkaline chlorides form through nucleation a significant amount of fine particles, whose diameter is below 1µm. This size of particles are almost impossible to separate with conventional electrostatic precipitators, which are typically used in cleaning flue gases. Thus, they go directly into outdoor air, where they cause problems. Fine particles are known to be, for example, hazardous to health.

In addition, it has been noted that fine particles formed of alkaline chlorides are carried with the ash formed in combusting biofuel to a DeNOX-catalyst, which is often used in removing nitrogen oxides from flue gases. They have been noticed to accelerate deactivation and poisoning of the catalyst. Fine particles have been detected, *inter alia*, to block the pore structure of the catalyst.

Feeding different additional materials to the furnace has been introduced in order to eliminate problems caused by chlorides. Patent FI 117631 (corresponding WO publication 2006/134227) discloses spraying liquid sulphate-containing compound to the superheater area of a steam boiler, which compound binds the alkaline chlorides formed in the furnace. In the patent EP 1354167 liquid sulphate compound or sulphuric acid is fed to flue gases before superheaters. For the purposes of feeding a sulphate compound, i.e. an additional material, at least one pipe has been installed between the side walls of the furnace, in which pipes openings have been arranged for feeding the additional material from the pipe to the flue gases.

It is also known to decrease the nitrogen oxide emissions of different types of boilers by feeding into their furnace various additional materials, which decrease the amount of nitrogen oxides formed in combustion in the flue gases. This type of solution is disclosed, for example, in the patent US 5,820,838, where additional material, such as ammonia or urea, which decreases nitrogen oxides, is sprayed to the furnace of a bubbling fluidized bed boiler. For spraying the additional material, cooled pipe panel surfaces are installed in the furnace, which include separate additional material channels for the additional material. Spraying additional material to the furnace takes place through openings arranged in the walls of the additional material channels. The pipe panel surfaces are either so-called omega panels or so-called wingwall panels, which are arranged vertically in the direction of the flue gas flow. The omega panels are composed of pipes stacked on top of each other, where the cross section is mainly quadrate or rectangular. The sides of the panels are therefore planar. The omega panels are attached between opposite furnace walls so that they extend across the furnace. The wingwall panels are formed of parallel water or steam pipes, which are attached to each other by means of either fins or additional material pipes, so that they form a planar structure. The wingwall panels are attached to the wall and/or ceiling of the furnace so that the pipes forming the panel are mainly parallel with the wall of the furnace.

The above-described feeding method and device for additional material does not provide a solution for how the additional material can be fed evenly over the entire cross-sectional area of the boiler on the flue gas channel and in the exact desired point and the correct temperature area in the boiler and/or the flue gas channels. It is important to set the feeding point of the additional material so that the additional material and the harmful materials formed in the furnace have enough time to react with each other and to form reaction products that are not harmful to the materials of the boiler or the environment.

In addition, a problem with the above-described wingwall panels is that they are structurally weak. Especially their lateral structure is weak and they easily loser their shape in furnace conditions.

### Brief summary of the invention

The purpose of the present invention is therefore to provide such a method and an apparatus for feeding additional material to the flue gases of a boiler, which avoids the above-mentioned problems and by means of which the additional material can be fed evenly over the entire feeding plane of additional material.

To attain this purpose, the method according to the invention is primarily characterized in what will be presented in the characterizing part of the independent claim 1.

The supply means for additional material according to the invention, in turn, is primarily characterized in what will be presented in the characterizing part of the independent claim 8.

The other, dependent claims will present some preferred embodiments of the invention.

The invention is based on the idea that in order to prevent corrosion, additional material is fed to the flue gases of a boiler by means of at least one supply means for additional material. The supply means for additional material is a cooled beam by its structure, which is manufactured by attaching conventional pipes used in manufacturing a heat surface to each other with fins so that they form a case structure. A heat exchange medium flows in the pipes forming the beam, which medium cools both the beam itself and the flue gases when they flow past at least three sides of the beam. The pipes are connected to the heat exchange medium circulation of the boiler, in which case the beam is one of the heat exchange surfaces of the boiler. The beam can also be connected so that it forms its own heat exchanged medium circulation.

At least one supply means, i.e. a beam is installed in the boiler or in the flue gas channel in the flow direction of flue gases before the heat exchange surfaces to be protected from corrosion, such as superheaters, between the opposite walls of the furnace or the flue gas channel. The ends of the beam extend outside the walls of the furnace or the flue gas channel, where the ends of the beam are closed with end plates, thus forming a closed case structure. The additional material is fed inside this case structure, the feeding of which additional material to the flue gases takes place through nozzles or openings arranged in the beam.

According to an embodiment of the invention the additional material fed to the furnace is gaseous. This kind of additional material is fed inside the beam through a duct formed at one end of the beam. Thus, the beam is filled with a gaseous additional material, which is fed to the flue gases by means of nozzles or openings arranged in the beam.

According to another embodiment of the invention the additional material fed to the furnace is liquid. Feeding pipes are arranged inside the beam, which pipes are connected to nozzles arranged in the beam, through which nozzles the additional material is fed. The additional material may also be fine-grained powdery material, which is fed to the flue gases by means of feeding pipes. In feeding both the liquid and the powdery additional material, carrier air is used, by means of which air the additional material is fed. It is also possible to install feeding lines inside the beam for more than one additional material.

Several beams are installed in parallel on the same plane of the boiler or the flue gas channel so that the protective effect of the additional material fed from them covers the entire cross-sectional area of the furnace or the flue gas channel as well as possible. By means of the beams it is possible to adjust the temperature of the flue gases before the heat exchange surfaces to be protected and because of this the number of beams to be installed depends on the desired temperature. The number of beams is, however, to be set into such that the flue gases may flow between them. The distance of parallel beams from each other is at least approximately 0.5 meters.

When the heat exchange surfaces to be protected are located in the furnace of the boiler, the beams can be placed to extend from the front wall of the furnace to the back wall, or from a side wall to another. It is also possible to place one or more bent beams on some wall so that its both ends are placed on the same wall. The placement of the beams depends on the additional material fed from the beams and from the reaction time required by that material with the harmful material in the flue gases. In addition, the placement height of the beams is affected by what the desired temperature of the flue gases is when they reach the heat exchange surface to be protected, for example superheaters.

The beams may also be installed in a flue gas channel. Then they are placed between opposite walls of the flue gas channel. One or more bent beams can also be placed on some wall of the flue gas channel. The only precondition is that the beams are placed before the heat exchange surface in the flow direction of the flue gases.

Through the beam it is possible to feed various additional materials that when reacting with the materials in the flue gases decrease the compounds that are harmful to the materials of the heat surfaces of the boiler or the environment. When corrosion of heat surfaces of the furnace is desired to be decreased, the additional material to be fed is iron (III) sulphate, Fe₂(SO₄)₃ and/or aluminum (III) sulphate, Al₂(SO₄)₃. These compounds are decomposed by the effect of temperature into iron or aluminum oxide and sulphur trioxide, which reacts with the alkaline of the alkaline chlorides and forms alkaline sulphate, which is significantly less harmful from the point of view of corrosion. Generally iron sulphate or aluminum sulphate are fed to the flue gases in liquid form, as small drops on such a level, where the temperature of the flue gases is 650 - 1000 °C, preferably 750 - 950 °C.

When aiming to prevent chlorine corrosion, the surface temperature of the beam or beams arranged in parallel is adjusted by means of the heat exchange medium flowing in the pipes into such that the surface temperature of the pipes is below approximately 450 °C. This ensures that the beams are not a target of chlorine corrosion. In addition, the sulphate fed from the beam reacts at least partly with the alkaline chlorides carried with the flue gases. In other words, the alkaline chloride amount in the flue gases can be decreased already before they reach the heat exchange surface to be protected from corrosion.

Further, due to the sulphate feeding and the temperature adjustment of the beams, more inexpensive superheater materials can be used in the superheaters. This provides great savings in material costs.

When the sulphate has been made to spread evenly over the flue gases, the entire superheater area can be protected from the harmful effect of alkaline chlorides. Sulphate reactions with alkaline chlorides also reduce the number of alkaline chloride fine particles shifting along the flue gases. The size of alkaline sulphates created in the reaction between alkaline chlorides and sulphate is somewhat larger than that of alkaline chlorides.

By means of the invention it is also possible to decrease the carbon dioxide emissions of the boiler.

An advantage of the invention is also the by means of it, it is possible to guarantee sufficient mixing of the additional material and hot flue gases, because the nozzles or feeding openings can easily be placed so that the jets from them enter deep into the furnace, thus covering substantially the entire cross-sectional area of the furnace.

Another advantage of the invention is that when the nozzles or openings used in feeding additional material are integrated into the beam, a simple and durable feeding structure for additional material is created. Thus, it is not necessary to install space-consuming and complex additional structures in the furnace, such as pipes for feeding the additional material. In addition, the fact that the beam is cooled prevents the additional material from decomposing in its conveyor pipes before it has been fed to the flue gases. The fact that the beam is cooled also offers a possibility for adjusting the temperature in the superheater area.

In addition, the above-described case beam structure has a strong structure and maintains its shape well in boiler conditions.

### Brief description of the drawings

In the following, the invention will be described in more detail with reference to the appended drawings, in which
- Fig. 1: shows schematically a bubbling fluidized bed boiler in a side view, in which bubbling fluidized bed boiler has been arranged at least one supply means for additional material,
- Fig. 2: shows schematically the cross section C - C of the furnace of the boiler of figure 1 in a top view,
- Fig. 3a: shows schematically a supply means for additional material in a side view,
- Fig. 3b: shows schematically the cross section A-A of the supply means for additional material shown in figure 3a,
- Fig. 3c: shows a detail of figure 3b,
- Fig. 4a: shows schematically another supply means for additional material in a side view,
- Fig. 4b: shows schematically the cross section B-B of the supply means for additional material shown in figure 4a,
- Fig. 4c: shows a detail of figure 4b,
- Fig. 4d: shows a nozzle suitable for feeding additional material seen from the furnace side,
- Fig. 5: shows schematically a circulating fluidized bed boiler in a side view, in which circulating fluidized bed boiler has been arranged at least one supply means for additional material, and
- Fig. 6: shows schematically a recovery boiler in a side view, in which recovery boiler has been arranged at least one supply means for additional material.

### Detailed description of the invention

In this description and claims the term additional material refers to a material, which forms reaction products in the boiler, which products prevent corrosion, and which material may be composed of either one material or a mixture of several materials or reagents. The additional material can be gaseous, liquid or powdery material. The term protected heat exchange surface refers to a heat exchange surface within the furnace or flue gas channel of a boiler, such as a superheater, an evaporator surface or an economizer surface, which is desired to be protected from corrosion.

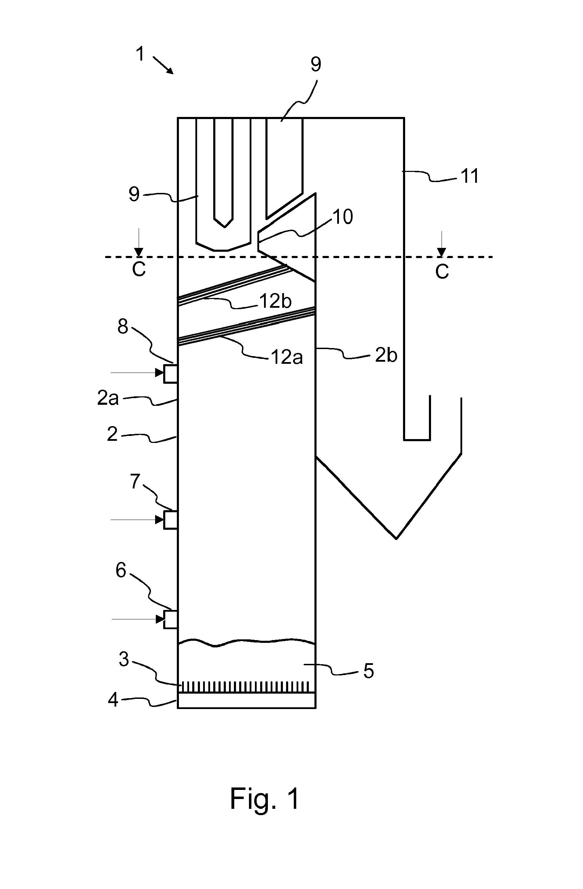

Figure 1 shows a boiler 1, which in this example is a bubbling fluidized bed boiler, which comprises a furnace 2. The walls of the furnace are formed of water-cooled pipes, which are attached to each other by fins. The lower part of the furnace comprises nozzles 3 for feeding fluidizing air, i.e. primary air from an air box 4 to the furnace. By the effect of fluidizing air the fluidized bed 5 in the furnace is fluidized, i.e. brought into continuous movement in the furnace 2. Fuel is fed to the furnace from fuel supply means 6, secondary air from secondary air nozzles 7 and tertiary air from tertiary air nozzles 8. The fuel being used is biofuel and/or refuse fuel.

The upper part of the furnace comprises superheaters 9, whose task is to provide superheated steam for a turbine (not shown in the figure). As seen in the figure, the pipes forming the wall of the furnace are bent inwards from the back wall 2b so that a nose 10 towards the front wall of the furnace is formed. The purpose of the nose 10 is to direct the flue gases in a desired manner to the superheaters 9.

The flue gases formed in the furnace are directed forward via a flue gas channel 11 in connection with the furnace. Heat exchange surfaces i.e. economizers are placed in the flue gas channel, which economizers are not shown in the figure for the purposes of clarity.

At least one supply means for additional material is arranged in the upper part of the furnace 2, in the flue gas flow. Advantageously there are several parallel supply means for additional material at the same height in the furnace. Figure 1 shows two alternative locations for the supply means of additional material. The supply means 12a and 12b for additional material are placed within a distance from the heat exchange surfaces protected from corrosion, i.e. the superheaters 9, in the flow direction of flue gases before the superheaters. The supply means 12a and 12b for additional material are in the embodiment of the figure arranged to extend from the front wall 2a of the furnace to the back wall 2b of the furnace, but if desired, they can also be installed to extend from one side wall to another. It is substantial in the placement of supply means for additional material that they are placed at the correct height before the superheaters. If desired, they can also be placed between the tertiary air nozzles 8 and the superheaters. In addition, it is important that the supply means for additional material are placed so that the additional material has enough time to react with the materials formed in the combustion process.

The supply means 12b for additional material are placed in the flow direction of flue gases closer to the superheaters 9 than the supply means 12a for additional material. The supply means 12b for additional material are installed to extend from the nose 10 to the opposite wall of the furnace 2, in which case the span length of the beams of the supply means for additional material can be made small and the structure strong.

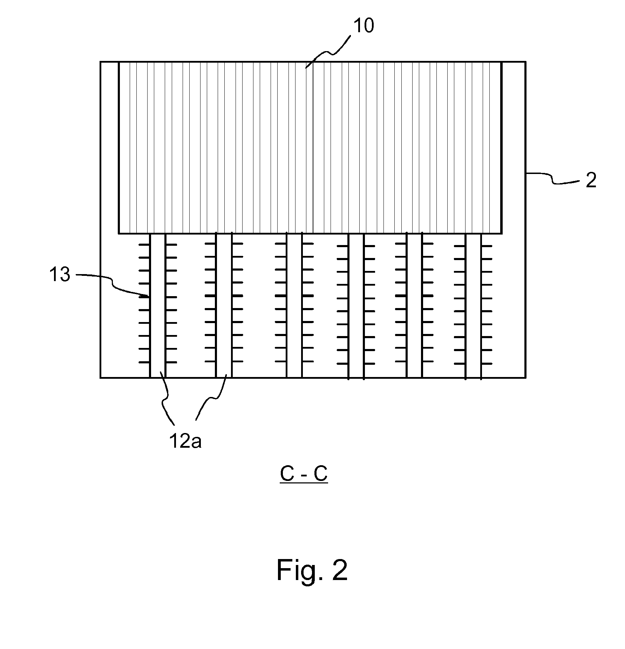

Figure 2 shows a cross section C-C of the furnace in a top view, which shows the location of the supply means for additional material, i.e. the beams 12a in the furnace 2. The beams 12a are arranged at even distances across the diameter of the furnace 2 so that the additional material fed from them spreads evenly over the entire cross-sectional area of the furnace. If desired, the beams can also be arranged so that the additional material fed from them covers only a part of the cross-sectional area of the furnace. Nozzles for feeding additional material to the flue gases are arranged in the beams 12a.

The jet of additional material created by the nozzles is schematically shown by lines 13. Naturally the additional material jet breaks apart immediately when coming into contact with flue gases, and in an actual use situation the jet of additional material is not directed completely forward, as shown in the figure. For the purposes of drawing, the figures shows only one row of nozzles on each side of the beam 12a, horizontally. The nozzles may be located either in one row in relation to the length of the beam, or they may be located in several rows. The nozzles may also be located in relation to each other in the direction of the length of the beam so that their distance to each other is even or it may vary. There may also be several rows of nozzles in the longitudinal direction of the beam and they may also be located so that the nozzles feed additional material above and below the beam as well. Thus, additional material is fed to the furnace evenly from around the beam. It is also possible to place the nozzles so that they feed the additional material only from above and/or below the beam, in the direction of the flue gas flow or against it. Substantial in the placement of nozzles is that the protective effect of the additional material fed from them covers the entire flue gas flow as well as possible. In this connection it is noted that the purpose of figure 2 is only to illustrate the location of beams 12a in the furnace 2, and therefore the dimensions of the figure do not correspond to an actual situation.

In the following the supply means 12a and 12b for additional material are explained in more detail. Even though the description only refers to the supply means 12a for additional material, the description also relates to the supply means 12b for additional material, because they are identical in their substantial parts.

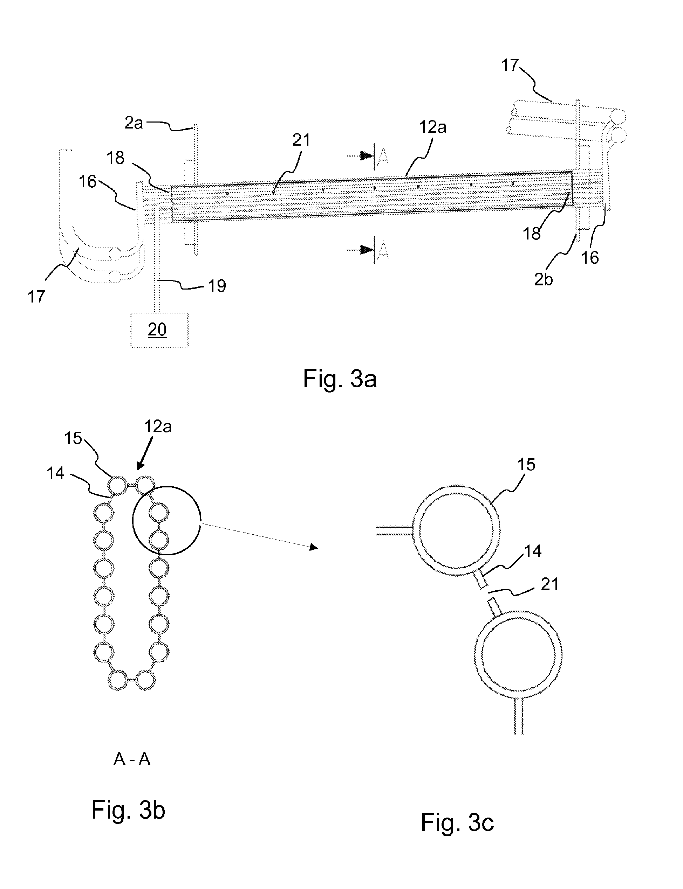

Figures 3a, 3b and 3c show a supply means for additional material, i.e. a beam 12a in more detail. The beam 12a is composed of pipes 15 attached together by means of fins 14, inside which pipes flows a heat exchanged medium, i.e. water, steam or a mixture of them. The pipes are attached to each other by means of fins so that a beam structure that is hollow inside is formed. With the number of pipes used in the beam it is possible to affect the temperature of flue gases, the rigidity of the structure and the evenness of feeding additional material. The beams are placed in the flue gases so that their longer sides settle in the direction of the flue gas flow. The pipes 15 forming the beam 12a are connected at their ends to collectors 16, which in turn are connected to water circulation pipes 17, which are connected to the heat exchange medium circulation of the boiler. Thus, a cooled supply means for additional material is created. The beam 12a may also have its own heat exchange medium circulation separate form the boiler.

Figure 3a shows the beam 12a in a side view. The beam 12a extends outside the walls 2a and 2b of the furnace. Both ends of the beam are closed with end plates 18 so that a closed case structure is formed. The additional material is fed inside the case structure form a feeding pipe 19 for additional material, which is arranged to open to one end plate 18 of the beam. Additional material is fed to the feeding pipe 19 from an additional material container 20. From the beam 12a the additional material is fed to the furnace via a nozzle 21. In the figure, seven nozzles are shown, but their number may vary. The nozzles 21 are placed in the fin plates 14 of the pipes, as can be seen from figure 3b showing the cross section of the beam and figure 3c showing a detail of the beam.

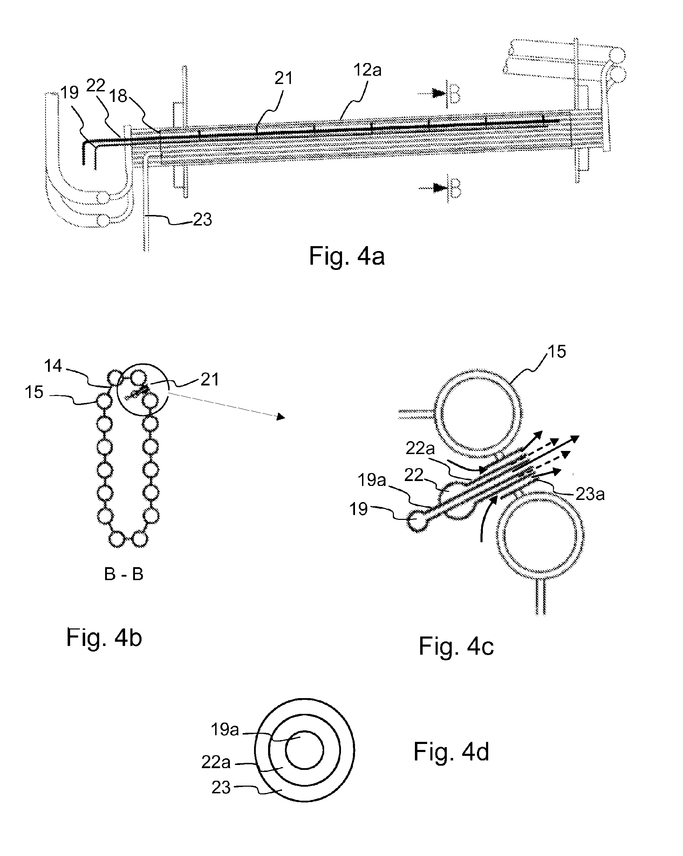

Figures 3a-3c show an embodiment of the invention, where the additional material fed to the flue gases is gaseous. Thus, the entire beam is filled with the additional material and it flows out via nozzles 21 arranged in the beam. The nozzles 21 may also be openings, such as those shown in the embodiment of figures 3a - 3c. In addition, special nozzles may be used, such as those used in the embodiments of figures 4a - 4c.

Figures 4a - 4d show an embodiment of the invention, where the additional material fed to the flue gases is liquid. Because of this, the supply means for additional material is different in relation to the parts inside the beam than the supply means 12a for additional material described in connection with figures 3a - 3c. In addition, the nozzle 21 is different. For the other parts, the supply means for additional material corresponds to the one shown in figures 3a - 3c.

The liquid or powdery additional material is fed to the furnace via nozzles 21 arranged in the fin plates connected to the pipes forming the beam. The nozzles 21 are connected to the feeding pipe 19 for additional material, which penetrates one end plate 18 and extends inside the beam to nozzles 21. Carrier air and shattering air is also fed to the nozzles. The feeding pipe 19 for additional material is connected to an additional material container, which has not been shown in the figure for clarity. Shattering air is brought in a feeding pipe 22 for shattering air through the end plate inside the beam and further directly to the nozzles 21. The feeding pipe 19 for additional material and the feeding pipe 22 for shattering air are therefore conveyed inside the beam 12a. Carrier air is brought inside the beam via a feeding pipe 23, which is arranged to open to the other end plate 18 of the beam. The entire beam is filled with carrier air and it flows to the furnace via nozzles 21.

Figures 4b and 4c show the cross section of the beam 12a and one nozzle 21. Figure 4d shows the nozzle 21 seen from the side of the furnace. The nozzle 21 is a ring-like nozzle extending through the fin 14. As seen from the furnace side, there is a feeding duct 19a for additional material in the middle of the nozzle, from where the additional material is fed to the furnace. The feeding duct 19a for additional material is surrounded by a feeding duct 22a for shattering air. Outermost is a carrier air duct 23, which surrounds the feeding duct 22a for shattering air.

The feeding duct 19a for additional material is inside the beam connected to a feeding pipe 19 for additional material and the feeding duct 22a for shattering air is connected to a feeding pipe 22 for shattering air so that the feeding duct 22a for shattering air surrounds the feeding duct 19a of additional material inside the beam. Thus, the additional material is fed to the furnace inside a curtain formed by shattering air. The purpose of the shattering air is to shatter the liquid jet into droplets of a desired size. The purpose of the carrier air is to carry the additional material as far away from the beam 12a as possible. From around the feeding pipe 22a for shattering air, carrier air is also fed to the furnace via a carrier air duct 23. Carrier air flows to the carrier air duct from inside the beam.

For the sake of clarity, figures 4a - 4c only show one feeding pipe 19 for additional material and a feeding pipe 22 for shattering air, which in this embodiment provide the additional material and the shattering air to only one row of nozzles in the longitudinal direction of the beam. In an actual use situation there are several alternatives for feeding additional material and shattering air. For example, it is possible to arrange several feeding pipes 19 for additional material and feeding pipes 22 for shattering air inside the beam, which feed additional material and shattering air to either one or more rows of nozzles in the longitudinal direction of the beam or a group of nozzles in the transverse direction. It is also possible to arrange only one feeding pipe for additional material and a feeding pipe for shattering air inside the beam, which feed additional material and carrier air to nozzles 21.

The droplet size of the additional material fed in a liquid form is important from the point of view of reactions, when the aim is to decrease chlorine corrosion in the boiler. Thus, the additive used is liquid iron or aluminum sulphate. The droplet size of the sulphate liquid should be small. Small particles have a large reaction area, which helps in the reaction with alkaline chlorides, whose particle size is also small.

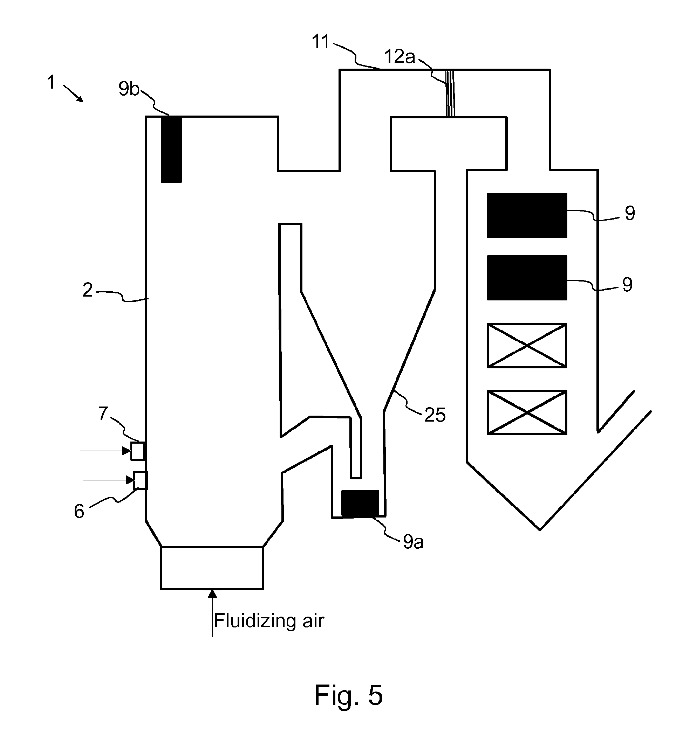

The supply means for additional material can also be used in a circulating fluidized bed boiler and a recovery boiler. Figure 5 shows a boiler 1, which is a circulating fluidized bed boiler. The boiler comprises a furnace 2, flue gas channels 11 and a cyclone 25. The separation of fluidized bed particles pulled with the flue gases takes place in the cyclone. The fluidized bed particles separated from the flue gases are returned back to the furnace 2. From the lower part of the furnace, fluidizing air is fed to the furnace. The rate and amount of fluidizing air is adjusted into such that the fluidized bed particles substantially fill the entire furnace by its effect. Fuel is fed to the furnace, which fuel may be biofuel, refuse fuel or coal from supply means 6 for fuel and combustion air from air nozzles 7. Combustion air can be fed from several levels. In addition, there are several superheaters 9, 9a and 9b in the boiler.

In this embodiment of the invention one or more supply means for additional material, i.e. the beam 12a is placed in the flue gas channel 11, in a flue gas flow. The beam is placed after the cyclone 25 in the flow direction of flue gases, before the protected heat exchange surfaces, i.e. superheaters 9. Advantageously the beams are placed in the flue gas channel several in parallel, within even distances so that their longer sides settle in the flow direction of flue gases. The length of the beams extends across the flue gas channel 11. The location of the beams in the flue gas channel is selected so that the distance between the beams and the heat exchange surfaces to be protected from corrosion, such as superheaters, is suitable so that the temperature of flue gases when they arrive at the superheaters is correct and that the additional material has enough time to react with the materials formed in the combustion process.

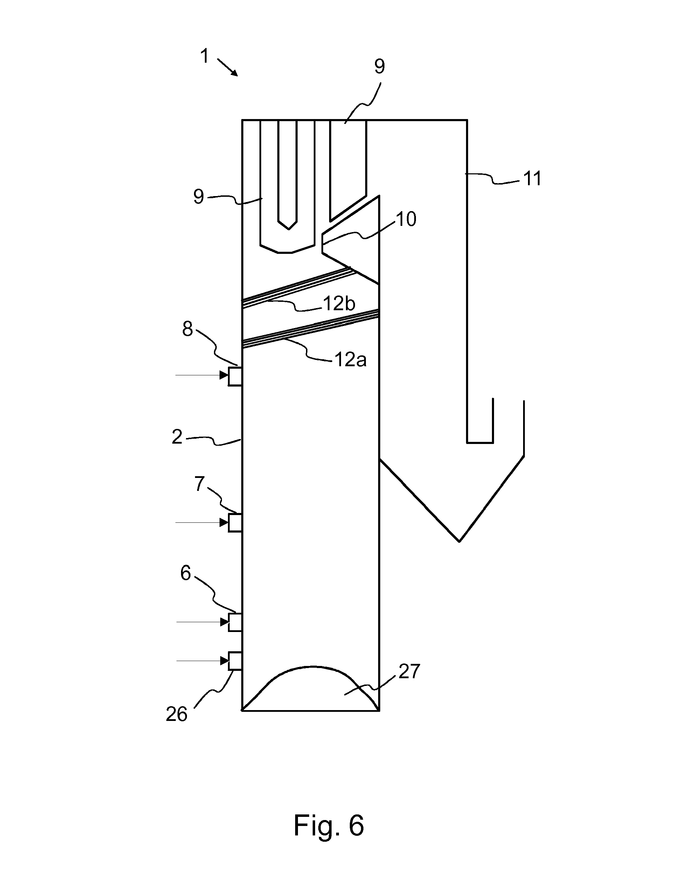

Figure 6 shows a boiler 1, which is a recovery boiler. In the recovery boiler, the fuel being used is cooking chemicals created in pulp manufacture, as well as liquid containing parts dissolved from wood, i.e. black liquor. The boiler comprises a furnace 2, to which black liquor is fed from the fuel supply means 6 and combustion air from air nozzles 26, 7 and 8 placed at different heights of the boiler. Smelt 27 is created at the bottom of the furnace from combusting liquor, which smelt is directed away from the furnace to be processed further. The upper part of the furnace comprises superheaters 9 and flue gases are directed away from the furnace via flue gas channels.

In the upper part of the furnace, in the flue gas flow, before the superheaters 9 are placed the supply means for additional material, i.e. one or more beams 12a or 12b. They are placed in the furnace substantially in the same way as in the bubbling fluidized bed boiler shown in figure 1, which is why it is not described here in more detail. It is substantial in the placement of supply means for additional material that they are placed at the correct height before the heat exchange surfaces protected from corrosion, i.e. superheaters. In addition, it is important that the supply means for additional material are placed so that the additional material has enough time to react with the materials formed in the combustion process.

The supply means for additional material may also be a case structure formed of bent pipes, where the collectors at both ends of the pipes are placed on the same wall of the furnace or the flue gas channel. The supply means for additional material thus forms a projection extending from the wall to the flue gas flow. There may be one or more of these supply means for additional material on the same wall.

The case beam according to the invention may also be utilized in feeding other additional materials. If the nitrogen oxide emissions of the boiler are desired to be decreased, the additional material to be fed is an ammonium compound, such as ammonia or urea. The additional material reacts with the nitrogen oxides in the flue gases, in which case the product of reaction is gaseous nitrogen. The ammonia or urea is fed to the furnace to such a level where the temperature is above approximately 700 °C, advantageously approximately 800 - 950 °C.

In addition, from the beam it is also possible to feed air to the furnace instead of additional material or in addition to it.

The invention is not intended to be limited to the embodiments presented as examples above, but the invention is intended to be applied widely within the scope of the inventive idea as defined in the appended claims.

## Claims

1. A method for preventing corrosion on heat exchange surfaces of a boiler, in which method additional material is fed to flue gases by means of at least one supply means (12a, 12b) for additional material arranged in the flue gases, which means comprises at least one nozzle (21) for feeding additional material to the flue gases **characterized in that** additional material is fed to the flue gases by means of a supply means (12, 12b), which supply means (12a, 12b) is a cooled case beam that is hollow inside.

2. The method according to claim 1, **characterized in that** the additional material is fed to the flue gases by means of a supply means (12, a, 12b), which supply means is formed of pipes (15) attached to each other by means of fins (14).

3. The method according to claim 1, **characterized in that** the additional material is fed to the flue gases in their flow direction before the heat exchange surfaces to be protected from corrosion.

4. The method according to claim 3, **characterized in that** the additional material is fed to the flue gases to the temperature area of 650 - 1000 °C, preferably 750 - 950 °C.

5. The method according to claim 1, **characterized in that** the additional material is iron (III) sulphate, Fe₂(SO₄)₃ and/or aluminum (III) sulphate, Al₂(SO₄)₃.

6. The method according to claim 1, **characterized in that** additional material is fed to the flue gases to a furnace (2) of the boiler or to a flue gas channel (11).

7. The method according to claim 6, **characterized in that** additional material is fed to the flue gases substantially over the entire cross-sectional area of the furnace (2) or the flue gas channel (11).

8. A supply means for additional material for feeding additional material preventing corrosion to flue gases of a boiler (1), which supply means (12a, 12b) comprises at least one nozzle (21) for feeding additional material, **characterized in that** the supply means (12a, 12b) is formed of pipes (15), in which is arranged a heat exchange medium circulation, which pipes (15) are attached to each other so that a case beam that is hollow inside is formed, in which beam are arranged several nozzles (21).

9. The supply means according to claim 8, **characterized in that** the pipes (15) are attached to each other by means of fins (14).

10. The supply means according to claim 8, **characterized in that** the nozzles (21) are arranged in at least one row in relation to the length of the supply means (12a, 12b).

11. The supply means according to claim 8, **characterized in that** the nozzles (21) comprise a feeding duct (19a) for additional material, which is surrounded by a feeding duct (22a) for shattering air and a carrier air duct (23), which surrounds the feeding duct (22a) for shattering air.

12. The supply means according to claim 11, **characterized in that** the feeding duct (19a) for additional material is connected to a feeding pipe (19) for additional material and the feeding duct (22a) for shattering air is connected to a feeding pipe (22) for shattering air, which feeding pipe (19) for additional material and feeding pipe (22) for shattering air are arranged to travel inside the supply means (12a, 12b).

13. The supply means according to claim 8, **characterized in that** the length of the supply means (12a, 12b) is selected so that it extends between the opposite walls of the furnace (2).

14. The supply means according to claim 8, **characterized in that** the length of the supply means (12a, 12b) is selected so that it extends between the opposite walls of the flue gas channel (11).

15. The supply means according to claim 8, **characterized in that** the boiler (1) is one of the following: a bubbling fluidized bed boiler, a circulating fluidized bed boiler, or a recovery boiler.
